# DEMANDE DE BREVET EUROPEEN

(11) **EP 0 618 173 A1**
(43) Date de publication de la demande: **05.10.1994**
(21) Numéro de dépôt: 94400713.7
(22) Date de dépôt: 01.04.1994
(51) Int. Cl.: C01F 5/00, C09K 5/00, F25B 30/04

(54) **Procédé de mise en oeuvre de réactions du type gaz-solide dans lequel le solide réactant renferme un sel au moins partiellement hydraté**

(30) Priorité: 02.04.1993 FR 9303918
(71) Demandeur: ELF AQUITAINE, F-92400 Courbevoie (FR)
(72) Inventeur: Bougard, Jacques D.F.G., B-7000 Mons (BE); Jadot, Roger H.E., B-7022 Mesvin - Mons (BE)
(74) Mandataire: Timoney, Ian Charles Craig

(57) **Abrégé**

Le procédé permet de déplacer la position de la droite d'équilibre de la réaction considérée et de diminuer sa pente dans un diagramme de Clapeyron de manière à couvrir une zone de température plus large pour un domaine de pression restreint.

## Description

La présente invention se rapporte à un procédé de mise en oeuvre de réactions gaz-solide dans lequel le solide réactant renferme un sel au moins partiellement hydraté.

La présente invention concerne plus particulièrement un procédé de mise en oeuvre de réactions chimiques gaz-solide permettant de modifier la position de la droite d'équilibre de la réaction considérée dans un diagramme de Clapeyron et de diminuer sa pente, afin de couvrir une zone de température plus large pour un domaine de pression assez restreint.

Le procédé visé par l'invention est basé sur une réaction renversable entre un solide et un gaz du type :

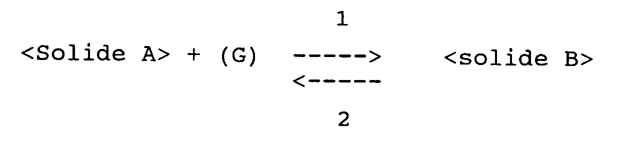

La réaction est exothermique dans le sens 1, ce qui veut dire que dans ce sens, elle dégage de la chaleur et endothermique dans le sens 2, c'est-à-dire que dans ce sens elle absorbe de la chaleur. Comme il s'agit d'une véritable réaction chimique, on a un système monovariant à l'équilibre, c'est-à-dire qu'il existe une relation univoque entre la température et la pression de la forme log P = A - B/T, expression dans laquelle P est la pression, T la température en °K et A et B sont des constantes caractéristiques du couple sel/gaz utilisé. Ainsi, l'équilibre de la réaction solide-gaz en question est caractérisé par une droite dans un diagramme de Clapeyron. Cette droite est dite droite d'équilibre de la réaction.

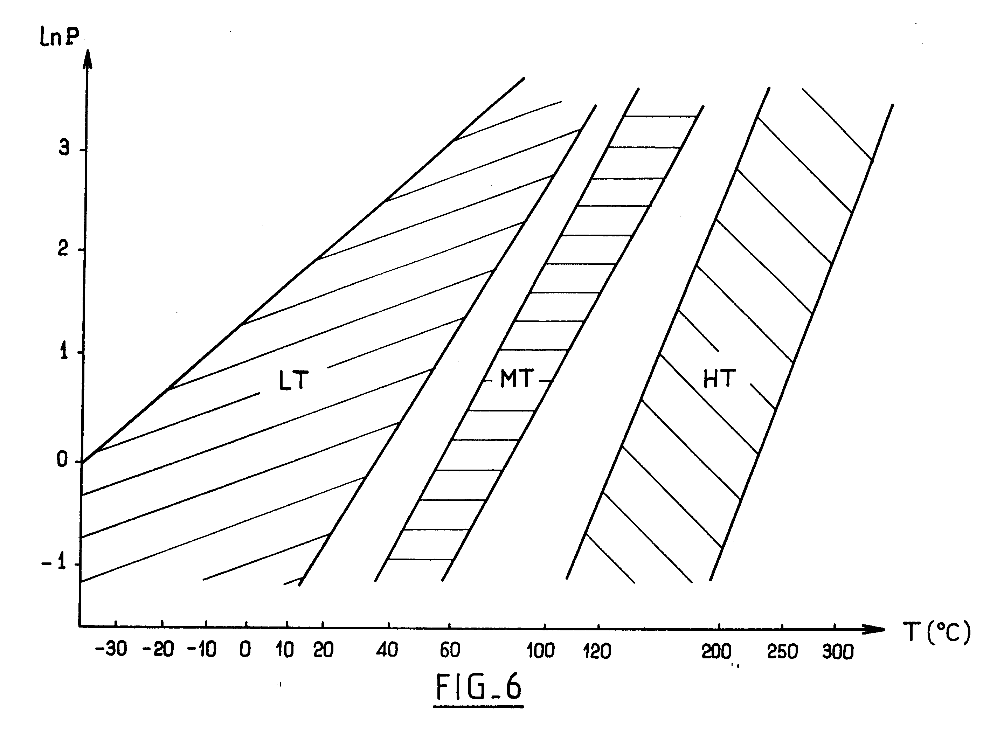

L'emploi d'un solide réactant anhydre se traduit généralement par une pente élevée de la droite d'équilibre de la réaction dans un diagramme de Clapeyron, ne permettant pas de couvrir une large zone de température pour un domaine de pression assez restreint. En particulier, la couverture des zones BT et MT mentionnées sur la figure 6 pour une gamme de pression allant de quelques mm Hg à plusieurs dizaines de bars n'est pas aisée dans ce cas de figure.

La présente invention a donc pour objet de pallier cet inconvénient en déplaçant la droite d'équilibre de la réaction dans un diagramme de Clapeyron et, en particulier, en diminuant la pente de cette droite, afin de couvrir une zone de température plus large pour une zone de pression restreinte tout en présentant de multiples avantages qui apparaîtront au cours de la lecture de la description.

Pour ce faire, l'invention propose un procédé de mise en oeuvre de réactions du type gaz-solide dans lequel le solide réactant renferme un sel, caractérisé en ce que le sel est au moins partiellement hydraté.

Le choix du sel et du gaz intervenant dans ce type de réaction dépend, entre autres, de la position de la droite d'équilibre de la réaction. Le sel utilisé peut être un chlorure, un sulfate, un phosphate ou tout autre sel présentant des caractéristiques analogues.

L'élaboration de sels non complètement séchés s'avère moins coûteuse et leur mise en oeuvre ne nécessite plus de monter aux hautes températures nécessaires à l'obtention des sels anhydres. De plus, beaucoup de sels hydratés sont disponibles commercialement.

Les hydrates sont très solubles dans l'eau ce qui permet leur intégration dans des processus en relation avec les réactions du type gaz-solide.

Les hydrates sont particulièrement adaptés aux réactions du type gaz-solide où le gaz est l'ammoniac.

En effet, beaucoup d'analogies existent entre les ammoniacates connus et les hydrates correspondants :
- les gammes de températures correspondant à l'existence des hydrates et ammoniacates se superposent à peu près,
- les énergies mises en jeu par molécule d'eau ou par molécule d'ammoniac sont de même ordre de grandeur :
   . 11 kcal/mol pour NH₃
   . 16 kcal/mol pour H₂O
- les molécules d'eau et d'ammoniac sont semblables au point de vue de leur taille et de leur caractère polaire.

De fait, les sels hydratés présentent une très bonne réactivité vis-à-vis de l'ammoniac.

Le niveau d'hydratation du solide réactant dans le réacteur peut être réglé à la demande et in situ.

La présence de molécule(s) d'eau vient modifier à la fois la valeur de la pression d'équilibre et le H de la réaction, ce qui a pour effet de modifier la pente de la droite d'équilibre de la réaction dans un diagramme de Clapeyron.

Ainsi, il est, par exemple, possible de couvrir un domaine de température plus large pour une gamme de pressions donnée.

On expliquera l'invention ci-après à l'aide d'un exemple donné à titre indicatif et non limitatif, et en se référant aux dessins annexés sur lesquels :
- la figure 1 est un dessin schématique d'un dispositif permettant l'étude du procédé selon la présente invention ;
- la figure 2 représente le thermogramme de déshydratation du MgCl₂.6H₂O en MgCl₂.1H₂O, mettant en évidence la déshydration par paquets du MgCl₂.6H₂O ;
- la figure 3 représente le thermogramme de déshydratation du MgCl₂.6H₂O en MgCl₂.2H₂O ;
- la figure 4 représente le thermogramme de la réaction du MgCl₂.2H₂O saturé à 390 K par une pression d'ammoniac de 9,03 bars et met en évidence un pic d'absorption caractéristique d'une réaction violente ;
- la figure 5 représente les droites d'équilibre dans un diagramme de Clapeyron des réactions avec l'ammoniac de l'hydro-ammoniacate MgCl₂.2H₂O (5 x) NH₃ et de l'hydro-ammoniacate MgCl₂.2H₂O (x 0) NH₃ formé à partir du MgCl₂.2H₂O et où x est un nombre strictement compris entre 0 et 5 ;
- la figure 6 définit les zones dites LT, MT et HT en fonction de la température et de la pression.

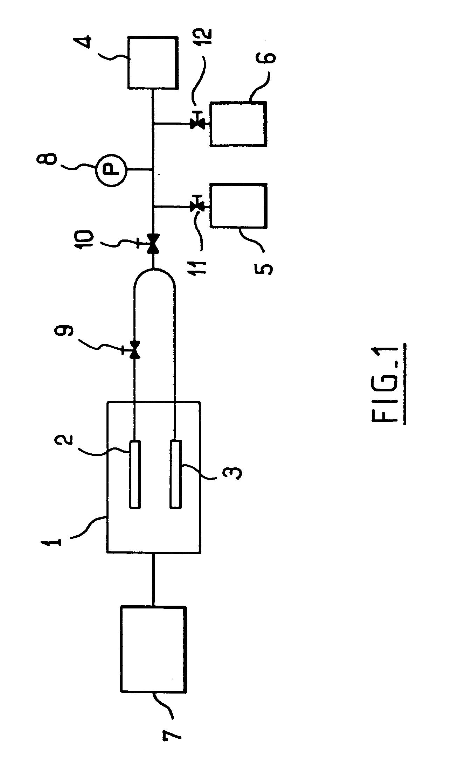

Comme représenté sur la figure 1, le dispositif permettant une mise en oeuvre du procédé à l'échelle du laboratoire selon la présente invention est constitué d'un calorimètre différentiel 1 et de deux cellules haute pression 2, 3 reliées à un circuit comprenant un réservoir d'ammoniac gazeux 4, une pompe à vide 5 et une bonbonne d'ammoniac 6. Le calorimètre différentiel 1 est relié à un enregistreur graphique 7 donnant le flux de chaleur dégagé en fonction de la température. La pression d'ammoniac est relevée à l'aide d'un capteur de pression 8.

Dans cet exemple, on utilisera du MgCl2 en tant que solide réactant, ce sel possédant des hydrates stables dans la gamme de température de travail allant de 0 à 200°C.

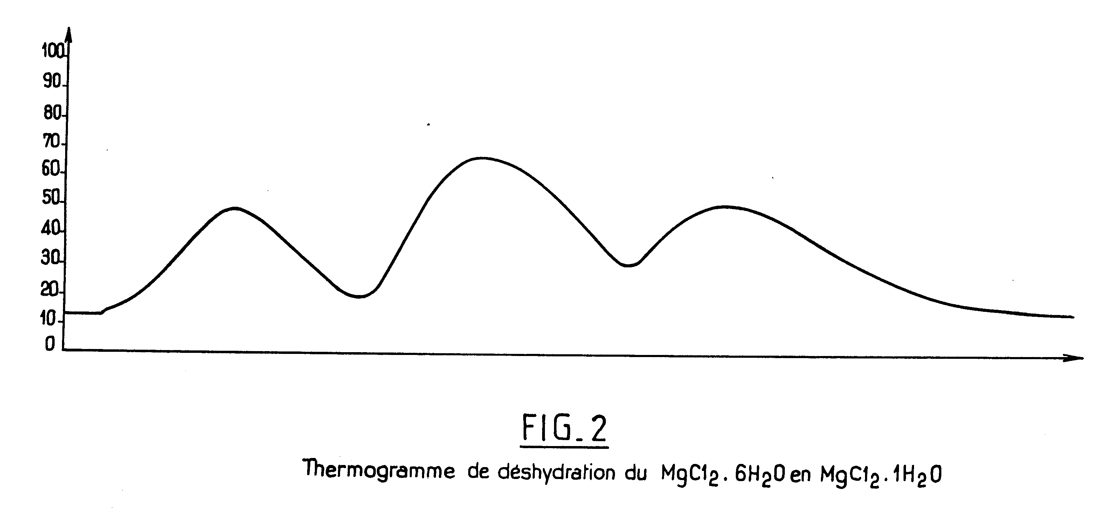

La figure 2 montre le thermogramme de déshydration du MgCl₂.6H₂O en MgCl₂.1H₂O obtenu par le dispositif représenté sur la figure 1. Ce thermogramme met en évidence la déshydratation appelée "par paquets" du MgCl₂.6H₂O en MgCl₂.1H₂O. On voit très nettement le départ successif de 2, puis 2, puis une molécule d'eau.

De ce fait, il est possible de régler le niveau d'hydratation du sel in situ et à la demande, en utilisant un programme de chauffe adéquat.

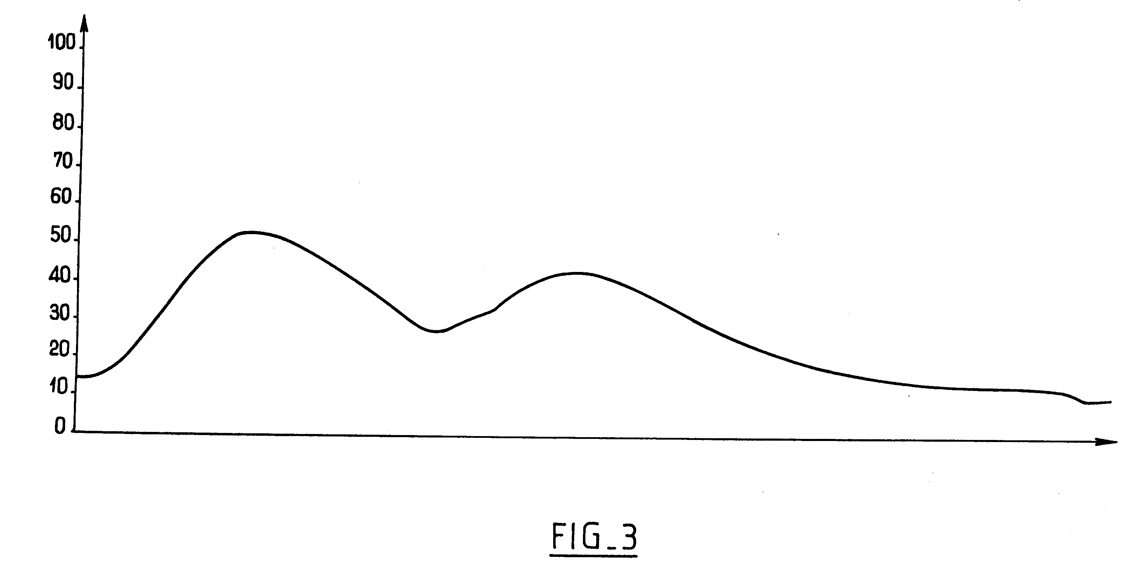

Ainsi, afin d'obtenir du MgCl₂.2H₂O, le MgCl₂.6H₂O a été déshydraté sous vide suivant un programme de chauffe de 300 à 390 K. Le thermogramme obtenu par le dispositif illustré par la figure 1 est représenté sur la figure 3.

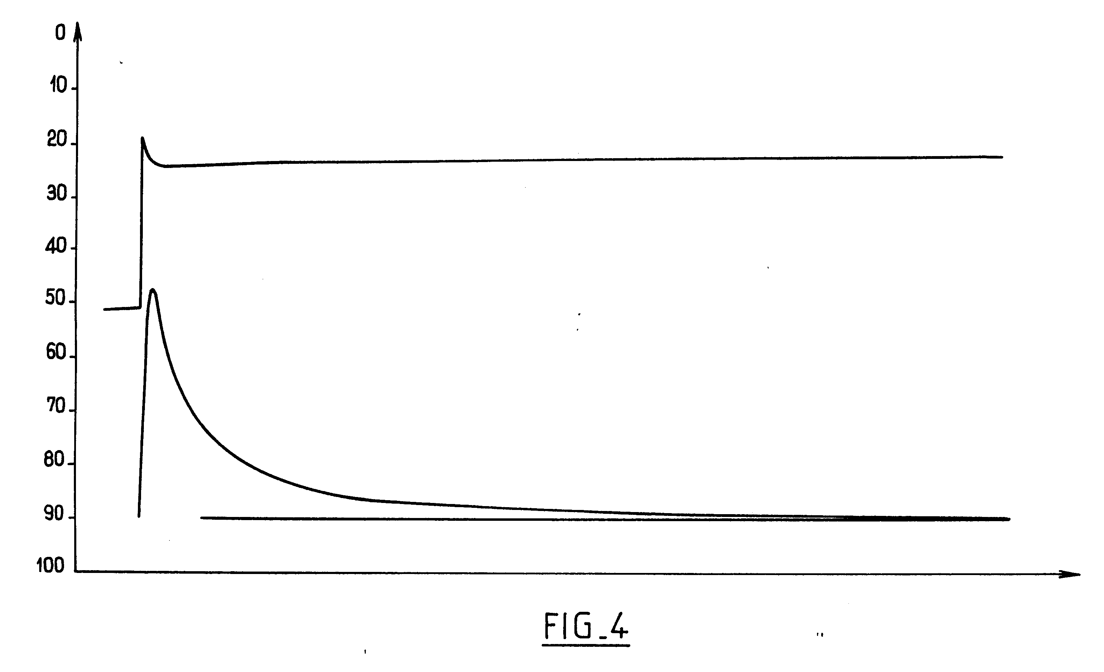

La figure 4 montre le pic d'absorption de NH₃ par MgCl₂.2H₂O caractéristique d'une réaction violente, lorsque l'on sature le sel à 390 K sous une pression d'ammoniac de 9,03 bars.

Dans les mêmes conditions que précédemment, un balayage en température de 390 à 300 K a été effectué, au cours duquel une seconde absorption s'est produite. Cela sous-entend la présence de deux droites d'équilibre caractéristiques de cet hydro-ammoniacate.

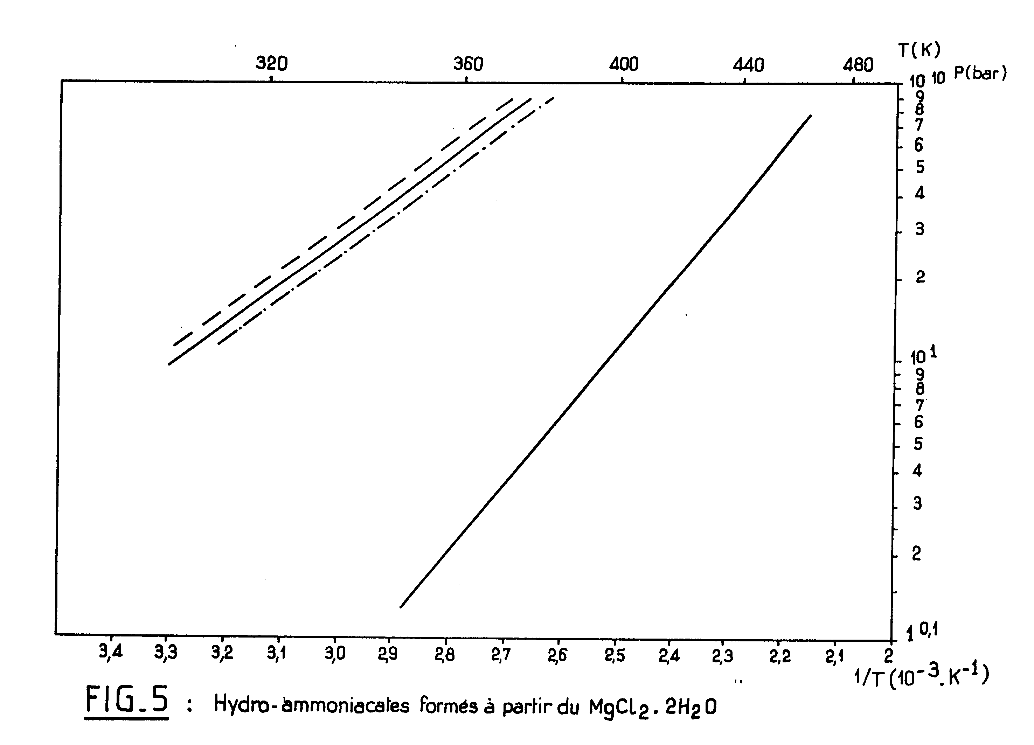

La figure 5 montre les deux droites d'équilibre des réactions des hydro-ammoniacates formés à partir du dihydrate de MgCl₂, obtenues à l'aide du dispositif décrit sur la figure 1 et selon le mode opératoire dont les étapes suivent :
1) mise de la cellule à température fixée,
2) désorption sous vide,
3) mise sous pression élevée d'NH₃ (supérieure à la pression d'équilibre estimée),
4) enregistrement complet du pic d'absorption,
5) désorption sous vide,
6) reprise des étapes 3 à 5 avec des pressions d'NH₃ de plus en plus faibles, jusqu'à disparition du phénomène d'absorption.

Un autre mode opératoire qui consisterait à un balayage de températures à pressions d'ammoniac fixées donne des résultats moins précis.

Les droites d'équilibres représentées sur la figure 5 permettent de déterminer une valeur moyenne d'enthalpie de réaction, ce qui donne pour chaque droite :

Hmoy [MgCl₂.2H₂O(5 x)NH₃] = 6,707 kcal/mol

Hmoy [MgCl₂.2H₂O(x O)NH₃] = 11,183 kcal/mol

x est compris strictement entre 0 et 5.

On remarque que la droite d'équilibre MgCl₂.2H₂O(5 x)NH₃ occupe une position intéressante due à sa faible pente puisqu'elle traverse les zones LT et MT définies sur la figure 6.

De plus, elle s'étend sur une large gamme de températures pour un domaine de pression assez restreint.

Le procédé de l'invention est particulièrement bien adapté à la réalisation de réactions gaz-solide renversables, mises en oeuvre dans des cycles tels que ceux qui sont utilisés pour le stockage chimique de l'énergie ou les pompes à chaleur thermochimiques.

Le procédé s'adapte aussi très bien à un procédé de mise en oeuvre de réactions gaz-solide dans lequel du graphite expansé serait ajouté au milieu réactionnel.

## Revendications

**1 -** Procédé de mise en oeuvre de réactions du type gaz-solide dans lequel le solide réactant renferme un sel, caractérisé en ce que le sel est au moins partiellement hydraté.

**2 -** Procédé selon la revendication 1 caractérisé en ce que le sel est complètement hydraté.

**3 -** Procédé selon l'une des revendications 1 ou 2 caractérisé en ce que le sel est un chlorure.

**4 -** Procédé selon la revendication 3 caractérisé en ce que le sel est du MgCl₂.

**5 -** Procédé selon la revendication 4 caractérisé en ce que le sel est du MgCl₂.nH₂O où n vaut 1,2,4 ou 6.

**6 -** Procédé selon l'une des revendications 1 ou 2 caractérisé en ce que le sel est un sulfate.

**7 -** Procédé selon l'une des revendications 1 ou 2 caractérisé en ce que le sel est un phosphate.

**8 -** Procédé selon l'une des revendications 1 à 7 caractérisé en ce que le gaz est l'ammoniac.

**9 -** Procédé selon l'une des revendications 1 à 8 caractérisé en ce que l'on règle le niveau d'hydratation du sel à la demande et in situ par application d'un programme de chauffe adéquat.
